# NEW EUROPEAN PATENT SPECIFICATION

(11) **EP 3 216 831 B2**
(45) Date of publication and mention of the opposition decision: **30.11.2022**
(45) Mention of the grant of the patent: 12.06.2019
(21) Application number: 17159814.7
(22) Date of filing: 08.03.2017
(51) Int. Cl.: C08L 27/06

(54) **A WATERPROOFING MEMBRANE COMPOSITION**
ABDICHTENDE MEMBRANZUSAMMENSETZUNG
COMPOSITION DE MEMBRANE D'IMPERMÉABILISATION

(30) Priority: 08.03.2016 EP 16159206
(43) Date of publication of application: 13.09.2017
(73) Proprietor: S.A. Imperbel N.V., 1651 Lot (BE)
(72) Inventor: AERTS, Hans, 1731 Zellik (BE)
(74) Representative: Willnegger, Eva

(56) References cited:
- EP-A1- 0 342 283
- EP-A1- 1 152 033
- EP-A2- 0 224 913
- EP-B1- 0 991 717
- WO-A1-2015/160579
- WO-A1-2015/160579
- DE-A1- 3 714 182
- US-A- 3 780 140
- US-A- 3 780 140
- US-A1- 2012 177 856
- US-H- H1 437
- ANONYMOUS: "®Vinnolit Graft Copolymers K 707 E, VK 707", VINNOLIT - TECHNICAL INFORMATION, June 2015 (2015-06-01)
- DR. ANDREAS WINTER: "PVC für Weichfolien", FACHTAGUNG PVC-FOLIEN, 21 April 2004 (2004-04-21), Würzburg, pages 1 - 22
- DIN: "Anwendung von Bauprodukten in Bauwerken - Teil 201: Anwendungsnorm für Abdichtungsbahnen nach Europäischen Produktnormen zur Verwendung in Dachabdichtungen", DIN SPEC 20000-201:2006-11, August 2015 (2015-08), pages 1-35,
- Technical information - November 2014 : Vinnolit S 4170 AOF
- Römpp-Chemie-Lexikon, Hrsg. J. Falbe u. M. Regitz, Georg Thieme Verlag, Bd. 4. 1991, S. 3327-3329
- Informationsforum der ddD e.V., Ausgabe 27, Winder 2013/2014
- Prüfbericht Dr. Wolfgang Ernst of 26.02.2016
- Certech test report R21/033 of 14.01.2021
- Tagesordnung SKZ PVC - Folientagung 2004
- Korrespondenz zwischen SKZ und Herr Dr. Winter 2004
- Archivierung Vortrag D8 (2 Fotografien)
- K.P. GroBkurth, S. Affolter, Shattering 2012 und EVA-Bahnen - Dichtung und Wahrheit - Irrungen eines Sachverständigen, Der Bauchsachverständige, Heft 3, 2015, Seiten 26-35

## Description

The present invention relates to a synthetic waterproofing membrane suitable for covering a roof of a building.

Generally, known waterproofing membranes comprise a reinforcement layer having on at least one side bitumen. Bitumen includes oils and is obtained from crude oil.

When known waterproofing membranes are applied on a roof of a building, the oils contained in the bitumen may migrate to the upper side of waterproofing membranes. This oil migration phenomenon is called exudation. This is a known disadvantage of bitumen based membranes, since the oils can be in contact with rain water leading to pollution.

The current trends in waterproofing products for roof coverings are more dedicated to ecological solutions.

Economical solutions are already available on the market through the use of synthetic membranes, specially being used for new buildings. Such synthetic membranes enable saving costs in comparison with bitumen based membranes. In fact, the manufacturing of synthetic membranes needs less material than bitumen based waterproofing membranes leading to a reduced thickness of the final product.

Synthetic membranes can be fire resistant, can have a good aesthetic appearance, can be flexible and pliable which enables applying it to all roof geometries. Moreover, they have to be durable and have appropriate physical properties. Physical properties include essentially tensile strength, elongation, hardness and cold brittleness.

In addition, synthetic membranes should have appropriate waterproofing properties to apply them on building roofs. These waterproofing properties should be ensured over time.

Typically, a synthetic membrane made of PVC comprises a reinforcement layer made, for example of polyester and another layer made of PVC based composition. The PVC is generally modified with some plasticisers, coupled with other additives, like pigment, fire retardant, biocide, lubricants, ultraviolet stabilisers, etc.

The presence of the plasticisers enables conferring the required flexibility to PVC in the membrane. In that way, PVC is like protected by the presence of the plasticisers in the blend. PVC is thereby sufficiently embedded in the body of the waterproofing membrane, which is protected from the external environment, when the latter is applied on a roof.

PVC can be used to provide an efficient waterproofing membrane over time, with the provision that the membrane is not adversely affected by its external environment. This means PVC needs to remain flexible, thanks to the presence of plasticisers.

However, it has been observed, during winter months in northern climates, cold weather conditions may adversely affect the aforementioned physical properties of the synthetic membrane leading to a membrane having a considerably decreased shelf life.

More specifically, synthetic membranes are especially vulnerable, when they become brittle with age resulting to the embrittlement of PVC during their lifetime. This phenomenon especially is problematic in winter conditions.

As explained above, PVC membranes owe their flexibility to the addition of plasticisers. However, it has been observed that, in both warm and cold regions, these plasticisers may migrate out of the membrane causing the embrittlement and shrinkage of the latter.

The sudden and catastrophic shattering of a PVC roof membrane is well known in the state of the art.

The lifetime of such synthetic waterproofing membranes can therefore not by guaranteed over time.

Besides this phenomenon, it has also been observed that known waterproofing membranes comprising PVC and EVA-CO, as plasticiser, enables avoiding the migration of the plasticizer out of the body of the membrane. However, this kind of membrane breaks at low temperature, in particular at -35 °C, resulting from the fact that the PVC is no more sufficiently flexible. In addition, the shattering problem is also observed with this type of synthetic membrane.

The document WO 2015 160 579 A1 relates to the use of core-shell impact modifiers with PVC formulations in order to reduce the brittleness of PVC and improve impact strength. This document also teaches the possibility of using at least one process aid in the PVC formulation.

However, such PVC formulations do not have a long shelf life, since it cannot support low temperature, in particular around -35 °C, when it is used in a final product, such as a waterproofing membrane for roof covering.

In place of providing an improved PVC formulation, the document EP 1 152 033 A1 discloses a protective capstock layer having weatherability properties, which is applied over PVC articles.

The document EP 0 342 283 A1 aims at providing light-scattering polymer compositions and / or polymer compositions having a reduced-gloss or matt surface finish. Another relevant document is US-A-3780140 .

There is therefore a need to provide a synthetic waterproofing membrane with a longer lifetime with respect to the known synthetic membranes and for which the shattering phenomenon can be reduced, in particular at low temperature (around -35 °C).

It is an object of the present invention to provide a synthetic waterproofing membrane having a longer lifetime with respect to the known synthetic membranes and which can remain efficient over time, in particular in cold environment.

To this end, the present invention provides a synthetic membrane for roof covering, which synthetic membrane comprises at least one reinfrocement layer and at least one layer made from a waterproofing membrane composition comprising PVC, at least one polar copolymer, at least one core-shell impact modifier, at least one polymeric process aid, characterized in that it further comprises at least one thermoplastic elastomer being a copolymer made of PVC grafted with polyacrylates, and at least one polar copolymer, which comprises at least ethylene vinyl-acetate (EVA) or at least ethylene n-butyl acrylate (EBA), and a polar group, which is chosen from the group consisting of hydroxyl, alkoxy, carbonyl, carboxylic acid, carboxylic acid anhydride, ether, ester, carboxylic ester, epoxy, sulfonyl, nitrile, amide, silane and mixture thereof.

It has been observed that the combination between the at least one polar copolymer which comprises at least ethylene /vinyl-acetate (EVA) or ethylene n-butyl acrylate (EBA), and a polar group and the at least one thermoplastic elastomer being a copolymer made of PVC grafted with polyacrylates in the presence of PVC enables providing a composition which has a longer life time with respect to known waterproofing membrane composition.

More precisely, the flexibility of PVC is guaranteed over time, thanks to this specific above mentioned combination. So, the shattering phenomenon and cold britlleness can be highly reduced. In fact, it has been discovered that the composition of the membrane of the present invention can stay stable in cold weather (-35 °C).

So, practically, the composition of the membrane of the present invention can be applied on a reinforcement layer to provide a synthetic membrane for roof covering. Such example of end use stays stable over time, even in cold weather (-35 °C). Furthermore, the shattering phenomenon mentioned above can highly be reduced and this enables keeping the physical properties of the waterproofing membrane, when the latter is applied on a roof, for a longer time.

More precisely, the at least one polar copolymer comprising at least ethylene /vinyl-acetate (EVA) or ethylene n-butyl acrylate (EBA), and a polar group, has an appropriate chemical affinity with PVC in terms of polarity This affinity is increased, thanks to presence of the at least one thermoplastic elastomer which comprises PVC and polyacrylates. This is highly advantageous.

The main physical properties of a synthetic waterproofing membrane include elongation, tensile strength, shattering and cold brittleness.

Advantageously, the at least one core-shell impact modifier has a rubber content of at least 90 wt. %.

In a particular embodiment, the at least one core-shell impact modifier is selected from the group consisting of methacrylate-butadiene-styrene copolymers (MBS), acrylonitrile-butadiene-styrene copolymers (ABS), acrylic core/shell polymers (AIM) and a combination thereof.

Preferably, the at least one polymeric process aid is an acrylic polymer.

In a particularly preferred embodiment according to the invention, the acrylic polymer is an acrylic copolymer having a Tg of less than 90°C, preferably less than 80 °C, more preferably less than 70°C, even more preferably less than 60°C.

Moreover, in a particular embodiment, said copolymer of acrylic polymer comprises methyl methacrylate units and at least one other acrylic monomer.

In particular, said copolymer of acrylic polymer comprises from 50-79 weight percent of methyl methacrylate units and at least one other acrylic monomer in a quantity from 20-50 weight percent.

Advantageously, the acrylic polymer is an acrylic copolymer having a molecular weight of 50,000 to 10,000,000 g/mol.

More advantageously, the acrylic polymer is an acrylic terpolymer comprising methylmethacrylate monomer units, butyl acrylate monomer units and styrene monomer units.

Preferably, the acrylic terpolymer comprises from 41-44 weight percent of methylmethacrylate monomer units, from 22-24 weight percent of butyl acrylate monomer units and 33-36 weight percent of styrene monomer units.

According to a preferred embodiment of the present invention, the composition comprises from 5 - 50 weight %, preferably between 10-40 weight percent, more preferably from 15-37 weight % of PVC.

The present invention preferably comprises from 0-10 weight % of a stabiliser in liquid state, in particular Ba-Zn stabiliser, the weight percent being defined with respect to the total weight of the composition.

According to a particular embodiment, the composition of the membrane of the present invention comprises from 5-40 weight %, preferably from 5-30 weight %, more preferably from 8-25 weight %, even more preferably from 9-20 weight %, advantageously less than 20 weight %, of the at least one polar copolymer which comprises(EVA-CO) or (EBA-CO), defined with respect to the total weight of the composition.

The content of the EVA or the EBA in the respective polar copolymer can generally be between 20-50 weight percent, and the carbon monoxide content in the polar copolymer can generally be between 5-40 weight percent.

More preferably, EVA-CO of the present invention contains 28,5 wt.% vinyl acetate units, and 9 wt.% carbon monoxide units and has a melt index of 35 g/10 minutes.

Advantageously, the EBA-CO of the present invention contains 29 wt.% butyl acrylate units, and 10 wt.% carbon monoxide units, having a melt index of 12 g/10 minutes.

In a preferred embodiment of the invention, the ethylene / vinyl-acetate/carbon monoxide copolymer (EVA-CO) is the commercial product Elvaloy^{®} 741 or 742, provided by Dupont firm.

According to a preferred embodiment of the present invention, the at least one polar copolymer is made of EVA. In this advantageous embodiment, the EVA can be the product Ateva^{®} 2820 A available at Celanese firm.

More preferably, the polar copolymer can be the product AMPLIFY^{™} TY 1052 H available at Dow. In the context of the present invention, it should be understood by the terms "polar copolymer", a copolymer made of EVA or EBA, which comprises a polar group chosen from the group consisting of hydroxyl, alkoxy, carbonyl, carboxylic acid, carboxylic acid anhydride, ether, ester, carboxylic ester, epoxy, sulfonyl, nitrile, amide, silane and mixture thereof.

The expression "polar group" should be understood as being any group that imparts a bond dipole moment to an otherwise essentially nonpolar olefin molecule.

The polar group can be introduced into the copolymer, either through grafting or copolymerization.

According to a particularly preferred embodiment, the composition of the membrane of the present invention, the at least one core-shell impact modifier is present in an amount from 2-25 weight %, more preferably from 4-20 weight %, even more preferably from 5-15 weight %, defined with respect to the total weight of the composition.

Preferably, the at least one polymeric process aid is present in an amount from 2-25 weight %, more preferably from 4-20 weight %, even more preferably from 5-15 weight %, defined with respect to the total weight of the composition.

More preferably, the composition membrane of the present invention comprises further from 0-20 weight % of a plasticiser defined according to the total weight of the composition.

Even more preferably, the composition membrane of the present invention comprises from 0-25 weight (wt.) %, preferably between 0,1-25 wt % of thermoplastic elastomer being a copolymer made of PVC grafted with polyacrylates, defined according to the total weight of the composition.

The thermoplastic elastomer is a copolymer made of PVC grafted with polyacrylates, more preferably PVC grafted with poly(butyl) acrylate. In a preferred embodiment, the thermoplastic elastomer is PVC grafted with poly(butyl) acrylate in a 50 / 50 ratio.

Other embodiments of the composition of the membrane of the present invention are mentioned in the annexed claims.

The present invention relates to a synthetic membrane for roof covering, which synthetic membrane comprises at least one reinforcement layer and at least one layer made from the composition according to any one of the preceding claims.

Other embodiments of the synthetic membrane according to the present invention are mentioned in the annexed claims.

Other characteristics and advantages of the invention will appear more clearly in the light of the following description of a particular non-limiting embodiment of the invention.

The composition of the membrane of the present invention comprises PVC, EVA-CO or EBA-CO, PVC grafted with poly(butyl) acrylate, at least one core-shell impact modifier and at least one polymeric process aid.

The at least one core-shell impact modifier can be in the form of particles having an inner elastomer core (rubber core) and at least one outer thermoplastic shell located on the inner elastomer core.

Preferably, the particle size of a core-shell impact modifier is generally less than 1 µm, advantageously between 50 nm and 1000 nm, or between 50 nm and 500 nm, or between 80 nm and 700 nm, most preferably between 90 nm and 350 nm. The particle size may be measured for example with a NiComp^{®} Model 380 ZLS.

The core-shell polymer particles are typically spherically-shaped. However, they can have any suitable shape.

In a preferred embodiments, the core-shell modifier particles included in the waterproofing membrane composition of the membrane of the present invention can have equivalent or substantially equivalent mean particle diameters (i.e., the waterproofing membrane composition does not include more than one population of core-shell modifier particles having different mean particle diameters).

More preferably, the core of the at least one core-shell impact modifier used in the composition of the membrane of the present invention may be made of isoprene homopolymers or butadiene homopolymers, isoprene-butadiene copolymers, copolymers of isoprene with at most 98 wt. % of a vinyl monomer and copolymers of butadiene with at most 98 wt. % of a vinyl monomer. The vinyl monomer may be styrene, an alkylstyrene, acrylonitrile, an alkyl(meth)acrylate, butadiene or isoprene. The core of the core-shell copolymer may be completely or partly crosslinked. At least bifunctional monomers may be added during the preparation of the core; these monomers may be chosen from poly (meth)acrylic esters of polyols, such as butylene di(meth)acrylate and trimethylolpropane trimethacrylate. Other bifunctional monomers are, for example, divinylbenzene, trivinylbenzene, vinyl acrylate, vinyl methacrylate and triallyl cyanurate. The core can also be crosslinked by introducing into it, by grafting or as a comonomer during the polymerisation, unsaturated functional monomers such as anhydrides of unsaturated carboxylic acids, unsaturated carboxylic acids and unsaturated epoxides. Mention may be made, by way of example, of maleic anhydride, (meth)acrylic acid and glycidyl methacrylate. The crosslinking may also be carried out by using the intrinsic reactivity of the monomers, for example the diene monomers.

Advantageously, the shell of the core-shell impact modifier may be made of styrene homopolymers, alkylstyrene homopolymers or methyl methacrylate homopolymers, or copolymers comprising at least 70 wt. % of one of the above monomers and at least one comonomer chosen from the other above monomers, another alkyl(meth)acrylate, vinyl acetate and acrylonitrile. The shell may be functionalised by introducing into it, by grafting or as a comonomer during the polymerisation, unsaturated functional monomers such as anhydrides of unsaturated carboxylic acids, unsaturated carboxylic acids and unsaturated epoxides. Mention may be made, for example, of maleic anhydride, (meth)acrylic acid glycidyl methacrylate, hydroxyethyl methacrylate and alkyl(meth)acrylamides. By way of example, mention may be made of core-shell copolymers having a polystyrene shell and core-shell copolymers having a PMMA shell. The shell may also contain imide functional groups, either by copolymerisation with a maleimide or by chemical modification of the PMMA by a primary amine. There are also core-shell copolymers having two shells, one made of polystyrene and the other, on the outside, made of PMMA.

Non-limiting examples of the types of core-shell impact modifiers that may be used in accordance with the present invention include methacrylate-butadiene-styrene copolymers (MBS), which typically have a core comprising a copolymer of butadiene and styrene and a shell comprising poly(methyl methacrylate) (PMMA); acrylonitrile- butadiene-styrene copolymers (ABS); or acrylic impact modifiers (AIM), which typically have an acrylic core (e.g., butyl acrylate or 2-thylhexyl acrylate) and a PMMA shell.

The core-shell impact modifier used in the waterproofing membrane of the present invention can be defined according to the features mentioned in the patent application WO 2015/160579.

The PVC according to the present invention preferably has a K value ranging from 40 K to 100 K or a weight average molecular weight ranging from 25000 Da to 200000 Da.

The PVC can advantageously be defined according to the features mentioned in the patent application WO 2015/160579.

According to the present invention, the waterproofing membrane composition comprises at least one polymeric process aid, for example at least one linear, non-core/shell polymeric process aid.

It is known in the art that different types of process aids affect thermoplastic resins based compositions, particularly PVC compositions, in different ways. For example, some polymeric process aids assist in the fusion of a thermoplastic composition (e.g., a PVC composition), while others add melt strength or provide lubrication. Polymeric process aids alone do not typically change the mechanical properties of a PVC composition, but they may increase the shear heating efficiency and thereby allow the fusion of the PVC to improve. The inclusion of a polymeric process aid often improves the impact performance of a thermoplastic composition.

The polymeric process aid used in the composition of the membrane of the present invention is preferably an acrylic copolymer. By "acrylic" "copolymer", as used herein, includes copolymers, terpolymers and other polymers containing two or more different alkyl methacrylate and/or alkyl acrylate monomer units and mixtures thereof. The copolymers may be random, block, tapered, comb, star or other polymer architecture. The alkyl methacrylate monomer units are preferably methyl methacrylate (MMA), which may make up from 50 to 79 weight percent, more preferably from 50 to 75 weight percent, and even more preferably 50 to 70 weight percent of the monomer mixture. The remaining weight percent of the polymer, is composed of at least one other alkyl acrylate and/or alkyl methacrylate type of monomer units, and may also include other ethylenically unsaturated monomers. Other (non-acrylic) monomers useful in the copolymer composition include, but are not limited to, styrene, alpha methyl styrene, acrylonitrile, and crosslinkers may also be present in the monomer mixture.

The Tg of the acrylic copolymer is preferably less than 90°C, preferably less than 80°C, more preferably less than 70°C, even more preferably less than 65 °C, and even less than 60°C.

In addition to the methyl methacrylate monomer units, other methacrylate and acrylate monomers useful in the monomer mixture include, but are not limited to, methyl acrylate, ethyl acrylate and ethyl methacrylate, butyl acrylate and butyl methacrylate, iso-octyl methacrylate and acrylate, lauryl acrylate and lauryl methacrylate, stearyl acrylate and stearyl methacrylate, isobornyl acrylate and methacrylate, methoxy ethyl acrylate and methacrylate, 2-ethoxy ethyl acrylate and methacrylate, dimethylamino ethyl acrylate and methacrylate monomers. Alkyl (meth) acrylic acids such as methyl acrylic acid and acrylic acid can be useful for the monomer mixture.

A preferred acrylic copolymer is one formed from methyl methacrylate (MMA) and butyl acrylate (BA) monomer units. In the MMA/BA copolymer, the level of MMA is 79 weight percent or less, preferably 75 weight percent or less, and even more preferably 70 weight percent or less, and the level of BA monomer units is 21 weight percent or greater, preferably at least 25 weight percent or greater, and even more preferably 30 weight percent or greater.

The acrylic copolymer can be formed into a powder or granules. The powder may be formed by typical means, such as spray drying, drum drying, freeze drying, vacuum drying, or coagulation by physical or chemical means. The acrylic copolymer may be supplied for use in manufacture in a convenient form, including but not limited to a powder, granules or pellets.

The at least one polymeric process aid used in the composition of the membrane of the present invention can be defined according to the features mentioned in the patent application WO 2011 041 195.

In a preferred embodiment of the membrane of the present invention, the polymeric process aid is an acrylic copolymer which can have two or more different monomer units, including terpolymers and polymers having 3 or more different monomers. The copolymer could be random, block, gradient or of other architectures. The copolymer could be linear, branched, or crosslinked. The copolymer may contain one or more functional groups, or may be unfunctionalised. According to this particular embodiment, acrylic copolymer as used herein, refers to copolymers having 60 percent or more of acrylic and/or methacrylic monomer units. "(meth) acrylate" is used herein to include both the acrylate, methacrylate or a mixture of both the acrylate and methacrylate. Useful acrylic monomers include, but are not limited to methyl (meth)acrylate, ethyl (meth)acrylate, n-propyl (meth)acrylate, isopropyl (meth)acrylatε, n-butyl (meth)acrylate, isobutyl (meth) acrylate, sec-butyl (meth)acrylate, tert-butyl (meth)acrylate, amyl (meth)acrylate, isoamyl (meth)acrylate, n-hexyl (meth)acrylate, cyclohexyl (meth) acrylate, 2-ethylhexyl (meth)acrylate, pentadecyl (meth)acrylate, dodecyl (meth)acrylate, isobornyl (meth)acrylate, phenyl (meth)acrylate, benzyl (meth)acrylate, phnoxyethyl (meth)acrylate, 2-hydroxyethyl (meth) acrylate and 2- methoxyethyl (meth)acrylate. Preferred acrylic monomers include methyl acrylate, ethyl acrylate, butyl acrylate, and 2-ethyl-hexyl-acrylate, methyl methacrylate, ethyl methacrylate, and butyl methacrylate.

The polymeric process aid used the composition of the membrane of the present invention can be defined with the features mentioned in the patent application WO 2010099160.

In a particularly preferred embodiment of the composition of the membrane of the present invention, the polymeric process aid is an acrylic terpolymer process aid which is a terpolymer polymerised from a monomer mixture of 41 to 44 percent by weight of methylmethacrylate (MMA), 22 to 24 percent by weight of butyl acrylate (BA) and 33 to 36 percent by weight of styrene.

The terpolymer may be made by any conventional polymerisation technique, including, but not limited to mass, bulk, solution, suspension, emulsion and inverse emulsion polymerisation.

The acrylic terpolymer process aid also can be defined according to the features mentioned in the patent US 7572862 B2.

Non-limiting examples include polymeric acrylic process aids, such as Plastistrength^{®} 530, 550, 551, 552, 557, 559, 576, 770 and L1000.

According to a particular embodiment of the present invention, the stabiliser can be a Ca/Zn stabiliser, preferably in solid state.

However, any suitable known stabilisers can be used in the composition of the membrane of the present invention.

The Ba/Zn stabiliser in liquid state is advantageously preferred since it enables obtaining an appropriate dispersion of all the compounds of the composition.

In a particularly preferred embodiment, the thermoplastic elastomer comprising PVC and polyacrylates is a PVC grafted with polybutyl acrylate.

Advantageously, the composition of the membrane of the present invention can comprise fillers, pigments, fire retardant, biocide, lubricants, ultraviolet stabilisers, like TiO2.

The manufacturing of a synthetic membrane with the composition of the membrane of the present invention comprises the following steps :
- Manufacturing of a synthetic layer comprising the composition,
- Providing at least one reinforcement layer having a first side and a second side, and
- Applying the synthetic layer on the first side of the at least one reinforcement layer.

Such membranes can then be secured on a roof by using known techniques.

The synthetic membrane can be manufactured by an extrusion process known in the state of the art.

In a preferred embodiment, a first and a second synthetic layers are obtained with the composition of the membrane of the present invention. The first layer can be secured on the first side of a reinforcement layer and the second layer can be secured on the second side of the reinforcement layer.

It is also possible to form a waterproofing composition based multi-layers structure and, preferably also several reinforcement layers.

The reinforcement layer can be made in a material chosen from the group consisting of woven or non-woven polyester, glass and fiberglass.

The main physical properties of a synthetic waterproofing membrane can be assessed by taking into account the following parameters : the elongation at break, the tensile strength, the cold break, the shattering and the quality of the surface.

The elongation and the tensile strength of a synthetic waterproofing membrane obtained with the composition of the membrane of the present invention can be determined by the EN-311-2 standard method.

The cold bending temperature, corresponding to the cold break test, of a synthetic waterproofing membrane obtained with the composition of the membrane of the present invention can be estimated by the EN-495-5 standard method

The shattering test consists in placing a mass of 1/2 kg at a height of 1 meter above the synthetic membrane placed in an environment having a temperature of - 30 °C and observe if the synthetic membrane completely breaks (-), totally resists (+) or partially resists (±).

The quality of the surface relates to the presence of defects which can appear on the surface and/or in the body of the waterproofing membrane directly after its manufacturing.

When waterproofing membranes have such defects on it or inside, it is necessary to remove these products which will not be put on the market.

An additional advantage of the composition of the membrane of the present invention is linked to the fact that it ensures a reliable and reproducible production of a series of synthetic waterproofing membranes by reducing the presence of defects in the final product.

So, at the end of the process of manufacturing a synthetic membrane obtained according to the present invention are located several cameras in the line of the production enabling to identify whether the defects are reasonable (±), problematic (-) or acceptable (+) on top of the membrane or even all around the membrane.

### Example 1

**Table 1**

| Compounds | Weight percent (%) |
|---|---|
| PVC K60 (S3160) | 30,7 |
| Ca/Zn Stabiliser | 3,1 |
| Epoxy resin | 1,93 |
| Organic phosphite | 0,2 |
| Plasticiser | 9,1 |
| PVC grafted with polybutyl acrylate | 21,5 |
| EVA-CO copolymer | 13,74 |
| Core-shell impact modifier | 7,5 |
| Polymeric process aid | 2,86 |
| Additives (biocides/clay) | 5,37 |
| UV stabilisator | 4 |

A blend is obtained by mixing the compounds mentioned in table 1 of example 1.

It is example, the PVC with a 60 K-Value can be commercially available under the trademark Vinnolit^{®} S3160.

The Ca/Zn stabiliser can be available under the product named Stabiol cz 3297/1.

The epoxy resin can Beckopox^{®} commercial product.

The organic phosphite can be available under the product named Stabiol P2029.

The plasticiser is diisononyl phthalate (DINP).

PVC grafted with polybutyl acrylate (thermoplastic elastomer) available under the trademark product ^{®}Vinnolit VK 701.

The EVA-CO copolymer can be the Elvaloy^{®} 741 commercial product.

The core-shell impact modifier can be the Durastrength^{®} D380 product and the polymeric process aid the Plastistrength^{®} P 551 trademark product.

The biocides can be available through the Interside ^{™} product.

The UV stabiliser can comprise titanium dioxide and carbon black.

The plasticiser can be replaced by a diisodecyl phthalate (DIDP), or by the trademark product Edenol^{®} 888R, Edenol^{®} D81 or Edenol^{®} 88R.

The PVC grafted with polybutyl acrylate can be replaced by the trademark product ^{®}Vinnolit VK 707e.

The composition of example 1 has been processed to obtain a synthetic layer which has then been applied on a first side of a reinforcement layer in polyester.

As explained in the description, the reinforcement layer can be made in another material.

The results of the several tests performed are shown in table 2 of example 1.

In table 2, the results show that the membrane has an elongation at break of 286 %, a tensile strength of 13,1 N/mm², a cold break lower than -35 °C, a positive shattering test and a surface having reasonable defects.

**Table 2**

| Test | Results |
|---|---|
| Elongation | 286 % |
| Tensile Strength | 13,1 N/mm² |
| Cold break | < - 35 °C |
| Shattering test | + |
| Surface | ± |

### Example 2

**Table 3**

| Compounds | Weight percent (%) |
|---|---|
| PVC K60 | 30 |
| Ba/Zn Stabiliser | 2,86 |
| Epoxy resin | 1,82 |
| Organic phosphite | 0,18 |
| Plasticiser | 7,73 |
| PVC grafted with polybutyl acrylate | 20,71 |
| EVA-CO copolymer | 13,21 |
| Core-shell impact modifier | 7,5 |
| Polymeric process aid | 2,86 |
| Additives (biocides/clay) | 9,47 |
| UV stabilisator | 3,66 |

According to this particular example, the compounds of the composition mentioned in table 3 are identical to the one of example 1 except that the stabiliser is a Ba/Zn Stabiliser.

As for example 1, the UV stabiliser can comprise titanium dioxide and carbon black.

The plasticiser can be replaced by a diisodecyl phthalate (DIDP), or by the trademark product Edenol^{®} 888R, Edenol^{®} D81 or Edenol^{®} 88R.

The PVC grafted with polybutyl acrylate can be replaced by the trademark product ^{®}Vinnolit VK 707e.

The composition of example 2 has been processed to obtain a synthetic layer which has then been applied on a first side of a reinforcement layer in polyester.

The results of the several tests performed are shown in table 4 of example 2.

In table 4, the results show that the membrane has an elongation at break of 293 %, a tensile strength of 13,6 N/mm², a cold break lower than -40 °C, a positive shattering test and an acceptable surface.

**Table 4**

| Test | Results |
|---|---|
| Elongation | 293 % |
| Tensile strength | 13,6 N/mm² |
| Cold break | < - 40 °C |
| Shattering test | + |
| Surface | + |

### Example 3

**Table 5**

| Compounds | Weight percent (%) |
|---|---|
| PVC K64 | 29,48 |
| Ca/Zn Stabiliser | 3,04 |
| Epoxy resin | 0 |
| Organic phosphite | 0 |
| Plasticiser | 13 |
| PVC grafted with polybutyl acrylate | 20,07 |
| EVA-CO copolymer | 13 |
| Core-shell impact modifier | 7,7 |
| Polymeric process aid | 3,07 |
| Additives (biocides/clay) | 6,6 |
| UV stabilisator | 4,04 |

According to this particular example, the compounds of the composition mentioned in table 5 are identical to the one of example 1 except that the PVC has a 64 K value (available under the commercial product:Solvin RC26PC) and the epoxy resin and organic phosphite are not present in the composition.

As for example 1, the UV stabiliser can comprise titanium dioxide and carbon black. The plasticiser can be replaced by a diisodecyl phthalate (DIDP), or by the trademark product Edenol^{®} 888R, Edenol^{®} D81 or Edenol^{®} 88R. The PVC grafted with polybutyl acrylate can be replaced by the trademark product ^{®}Vinnolit VK 707e.

The composition of example 5 has been processed to obtain a synthetic layer which has then been applied on a first side of a reinforcement layer in polyester.

The results of the several tests performed are shown in table 6 of example 3.

In table 6, the results show that the membrane has an elongation at break of 267 %, a tensile strength of 13 N/mm², a cold break lower than -40 °C, a positive shattering test and surface having reasonable defects.

**Table 6**

| Test | Results |
|---|---|
| Elongation | 267 % |
| Tensile strength | 13 N/mm² |
| Cold break | -40 °C |
| Shattering test | + |
| Surface | ± |

### Comparative example 1

**Table 7**

| Compounds | Weight percent (%) |
|---|---|
| PVC K60 | 27,2 |
| Ca/Zn Stabiliser | 3,4 |
| Epoxy resin | 1,93 |
| Organic phosphite | 0,2 |
| Plasticiser | 9,90 |
| PVC grafted with polybutyl acrylate | 29,9 |
| EVA-CO copolymer | 13,6 |
| Core-shell impact modifier | 0 |
| Polymeric process aid | 0 |
| Additives (biocides/clay) | 10,07 |
| UV stabilisator | 3,8 |

In the comparative example 1, the compounds mentioned in table 7 have been mixed to obtain a composition. The latter has been processed for the manufacturing of a waterproofing membrane. The results obtained for such membrane are mentioned in table 8 below.

**Table 8**

| Test | Results |
|---|---|
| Elongation | 236 % |
| Tensile strength | 12,2 N/mm² |
| Cold break | -25 °C |
| Shattering | - |
| Surface | - |

As illustrated, the membrane has an elongation of 236 %, a tensile strength of 12,2 N/mm², a cold break of -25°C, a negative shattering and the quality of the surface is negative meaning that several important defects have been observed on the membrane after its manufacturing.

### Comparative example 2

**Table 9**

| Compounds | Weight percent (%) |
|---|---|
| PVC K60 (S3160) | 30,7 |
| Ca/Zn Stabiliser | 3,1 |
| Epoxy resin | 1,93 |
| Organic phosphite | 0,2 |
| Plasticiser | 9,1 |
| PVC grafted with polybutyl acrylate | 0 |
| EVA-CO copolymer | 35.24 |
| Core-shell impact modifier | 7,5 |
| Polymeric process aid | 2,86 |
| Additives (biocides/clay) | 5,37 |
| UV stabilisator | 4 |

In the comparative example 2, the compounds mentioned in table 9 have been mixed to obtain a composition. The latter has been processed for the manufacturing of a waterproofing membrane. The results obtained for such membrane are mentioned in table 10 below.

**Table 10**

| Test | Results |
|---|---|
| Cold break | -20 °C |
| Shattering | - |
| Surface | - |

As illustrated in table 10, the membrane has a cold break of -20°C, a negative shattering and the quality of the surface is negative meaning that several important defects have been observed on the membrane after its manufacturing.

## Claims

1. Synthetic membrane for roof covering, which synthetic membrane comprises at least one reinforcement layer and at least one layer made from a waterproofing membrane composition comprising:
▪ Polyvinyl chloride (PVC),
▪ At least one core-shell impact modifier,
▪ At least one polymeric process aid,
**characterized in that** it further comprises:
▪ At least one thermoplastic elastomer being a copolymer made of PVC grafted with polyacrylates, and
▪ At least one polar copolymer, which comprises at least ethylene vinyl-acetate (EVA) or at least ethylene n-butyl acrylate (EBA), and a polar group, which is chosen from the group consisting of hydroxyl, alkoxy, carbonyl (-CO), carboxylic acid, carboxylic acid anhydride, ether, ester, carboxylic ester, epoxy, sulfonyl, nitrile, amide, silane and mixture thereof.

2. The synthetic membrane for roof covering according to claim 1, wherein the at least one core-shell impact modifier has a rubber content of at least 90 wt. %.

3. The synthetic membrane for roof covering according to claim 1 or 2, wherein the at least one core-shell impact modifier is selected from the group consisting of methacrylate-butadiene-styrene copolymers (MBS), acrylonitrile-butadiene-styrene copolymers (ABS), acrylic core/shell polymers (AIM) and a combination thereof.

4. The synthetic membrane for roof covering according to any one of the preceding claims, wherein the at least one polymeric process aid is an acrylic polymer.

5. The synthetic membrane for roof covering according to claim 4, wherein the acrylic polymer is an acrylic copolymer having a Tg of less than 90°C, preferably less than 80 °C, more preferably less than 70°C, even more preferably less than 60°C.

6. The synthetic membrane for roof covering according to claim 5, wherein said copolymer of acrylic polymer comprises methyl methacrylate units and at least one other acrylic monomer.

7. The synthetic membrane for roof covering according to claim 4, wherein the acrylic polymer is an acrylic terpolymer comprising methyl methacrylate monomer units, butyl acrylate monomer units and styrene monomer units.

8. The synthetic membrane for roof covering according to claim 1, comprising from 5 - 50 weight %, preferably between 10-40 weight percent, more preferably from 15-37 weight % of PVC.

9. The synthetic membrane for roof covering according to any one of the preceding claims, comprising from 0-10 weight % of a stabiliser in liquid state, in particular Ba-Zn stabiliser, the weight percent being defined with respect to the total weight of the composition.

10. The synthetic membrane for roof covering according to any one of the preceding claims, comprising from 5-40 weight %, preferably from 5-30 weight %, more preferably from 8-25 weight %, even more preferably from 9-20 weight %, advantageously less than 20 weight %, of the at least one polar copolymer comprising EVA-CO or EBA-CO, defined with respect to the total weight of the composition.

11. The synthetic membrane for roof covering according to any one of the preceding claims, wherein the at least one core-shell impact modifier is present in an amount from 2-25 weight %, more preferably from 4-20 weight %, even more preferably from 5-15 weight %, defined with respect to the total weight of the composition.

12. The synthetic membrane for roof covering according to any one of the preceding claims, wherein the at least one polymeric process aid is present in an amount from 2-25 weight %, more preferably from 4-20 weight %, even more preferably from 5-15 weight %, defined with respect to the total weight of the composition.

13. The synthetic membrane for roof covering according to any one of the preceding claims comprising from 0-20 weight % of a plasticiser defined according to the total weight of the composition.

14. The synthetic membrane for roof covering according to any one of the preceding claims comprising from 0,1-25 weight % of thermoplastic elastomer comprising PVC and polyacrylates, defined according to the total weight of the composition.

## Patentansprüche

1. Synthetische Membran für die Dachabdeckung, wobei die synthetische Membran mindestens eine Verstärkungsschicht und mindestens eine Schicht aus einer wasserdichten Membranzusammensetzung umfasst, umfassend:
▪ Polyvinylchlorid (PVC),
▪ Mindestens ein Kem-Schale-Schlagzähigkeitsmodifikator,
▪ Mindestens ein polymeres Prozesshilfsmittel,
**dadurch gekennzeichnet, dass** es ferner umfasst:
▪ Mindestens ein thermoplastisches Elastomer, das ein Copolymer aus mit Polyacrylaten gepfropftem PVC ist, und
▪ Mindestens ein polares Copolymer, das mindestens Ethylenvinylacetat (EVA) oder mindestens Ethylen-n-butylacrylat (EBA) und eine polare Gruppe umfasst, die ausgewählt ist aus der Gruppe bestehend aus Hydroxyl, Alkoxy, Carbonyl (-CO), Carbonsäure, Carbonsäureanhydrid, Ether, Ester, Carbonsäureester, Epoxy, Sulfonyl, Nitril, Amid, Silan und einer Mischung davon.

2. Synthetische Membran für die Dachabdeckung nach Anspruch 1, wobei der mindestens eine Kem-Schale-Schlagzähmodifikator einen Kautschukgehalt von mindestens 90 Gew.-% aufweist.

3. Synthetische Membran für die Dachabdeckung nach Anspruch 1 oder 2, wobei der mindestens eine Kern-Schale-Schlagzähigkeitsmodifikator ausgewählt ist aus der Gruppe bestehend aus Methacrylat-Butadien-Styrol-Copolymeren (MBS), Acrylnitril-Butadien-Styrol-Copolymeren (ABS), Acryl-Kem-Schale-Polymeren (AIM) und einer Kombination davon.

4. Synthetische Membran für die Dachabdeckung nach einem der vorhergehenden Ansprüche, wobei das mindestens eine polymere Verarbeitungshilfsmittel ein Acrylpolymer ist.

5. Synthetische Membran für die Dachabdeckung nach Anspruch 4, wobei das Acrylpolymer ein Acrylcopolymer mit einer Tg von weniger als 90°C, vorzugsweise weniger als 80°C, noch bevorzugter weniger als 70°C, noch bevorzugter weniger als 60°C ist.

6. Synthetische Membran für die Dachabdeckung nach Anspruch 5, wobei das Copolymer aus Acrylpolymer Methylmethacrylateinheiten und mindestens ein anderes Acrylmonomer umfasst.

7. Synthetische Membran für die Dachabdeckung nach Anspruch 4, wobei das Acrylpolymer ein Acrylterpolymer ist, das Methylmethacrylatmonomereinheiten, Butylacrylatmonomereinheiten und Styrolmonomereinheiten umfasst.

8. Synthetische Membran für die Dachabdeckung nach Anspruch 1, die 5 bis 50 Gew.- %, vorzugsweise 10 bis 40 Gew.-%, besonders bevorzugt 15 bis 37 Gew.-% PVC enthält.

9. Synthetische Membran für die Dachabdeckung nach einem der vorhergehenden Ansprüche, enthaltend 0-10 Gew.-% eines Stabilisators in flüssigem Zustand, insbesondere Ba-Zn-Stabilisator, wobei die Gewichtsprozente in Bezug auf das Gesamtgewicht der Zusammensetzung definiert sind.

10. Synthetische Membran für die Dachabdeckung nach einem der vorhergehenden Ansprüche, umfassend 5-40 Gew.-%, vorzugsweise 5-30 Gew.-%, noch bevorzugter 8-25 Gew.-%, noch bevorzugter 9-20 Gew.-%, vorteilhafterweise weniger als 20 Gew.-%, des mindestens einen polaren Copolymers, umfassend EVA-CO oder EBA-CO, definiert in Bezug auf das Gesamtgewicht der Zusammensetzung.

11. Synthetische Membran für die Dachabdeckung nach einem der vorhergehenden Ansprüche, wobei der mindestens eine Kem-Schale-Schlagzähigkeitsmodifikator in einer Menge von 2-25 Gew.-%, bevorzugter von 4-20 Gew.-%, noch bevorzugter von 5-15 Gew.-%, bezogen auf das Gesamtgewicht der Zusammensetzung, vorhanden ist.

12. Synthetische Membran für die Dachabdeckung nach einem der vorhergehenden Ansprüche, wobei das mindestens eine polymere Verarbeitungshilfsmittel in einer Menge von 2 bis 25 Gew.-%, bevorzugter von 4 bis 20 Gew.-%, noch bevorzugter von 5 bis 15 Gew.-%, definiert in Bezug auf das Gesamtgewicht der Zusammensetzung, vorhanden ist.

13. Synthetische Membran für die Dachabdeckung nach einem der vorhergehenden Ansprüche, die 0-20 Gew.-% eines Weichmachers, bezogen auf das Gesamtgewicht der Zusammensetzung, enthält.

14. Synthetische Membran für die Dachabdeckung nach einem der vorhergehenden Ansprüche, umfassend von 0,1-25 Gew.-% eines thermoplastischen Elastomers, das PVC und Polyacrylate enthält, definiert in Bezug auf das Gesamtgewicht der Zusammensetzung.

## Revendications

1. Membrane synthétique pour couverture de toit, laquelle membrane synthétique comprend au moins une couche de renfort et au moins une couche réalisée à partir d'une composition de membrane d'étanchéité comprenant :
▪ Chlorure de polyvinyle (PVC),
▪ Au moins un modificateur d'impact de type core-shell,
▪ Au moins un auxiliaire de traitement polymère,
**caractérisé en ce qu'**il comprend en outre :
▪ Au moins un élastomère thermoplastique étant un copolymère de PVC greffé avec des polyacrylates, et
▪ Au moins un copolymère polaire, qui comprend au moins de l'éthylène vinyl-acétate (EVA) ou au moins de l'éthylène n-butyl acrylate (EBA), et un groupe polaire, qui est choisi dans le groupe constitué par les groupes hydroxyle, alcoxy, carbonyle (-CO), acide carboxylique, anhydride d'acide carboxylique, éther, ester, ester carboxylique, époxy, sulfonyle, nitrile, amide, silane et leurs mélanges.

2. Membrane synthétique pour couverture de toit selon la revendication 1, dans laquelle l'au moins un modificateur d'impact noyau-enveloppe a une teneur en caoutchouc d'au moins 90 % en poids.

3. Membrane synthétique pour couverture de toit selon la revendication 1 ou 2, dans laquelle le au moins un modificateur d'impact de type core-shell est choisi dans le groupe constitué par les copolymères méthacrylate-butadiène-styrène (MBS), les copolymères acrylonitrile-butadiène-styrène (ABS), les polymères acryliques coeur-enveloppe (AIM) et une combinaison de ceux-ci.

4. Membrane synthétique pour couverture de toit selon l'une quelconque des revendications précédentes, dans laquelle l'au moins un auxiliaire de traitement polymérique est un polymère acrylique.

5. Membrane synthétique pour couverture de toit selon la revendication 4, dans laquelle le polymère acrylique est un copolymère acrylique ayant une Tg inférieure à 90°C, de préférence inférieure à 80°C, plus préférablement inférieure à 70°C, encore plus préférablement inférieure à 60°C.

6. Membrane synthétique pour couverture de toit selon la revendication 5, dans laquelle ledit copolymère de polymère acrylique comprend des motifs méthacrylate de méthyle et au moins un autre monomère acrylique.

7. Membrane synthétique pour couverture de toit selon la revendication 4, dans laquelle le polymère acrylique est un terpolymère acrylique comprenant des unités monomères de méthacrylate de méthyle, des unités monomères d'acrylate de butyle et des unités monomères de styrène.

8. Membrane synthétique pour couverture de toit selon la revendication 1, comprenant de 5 à 50 % en poids, de préférence entre 10 et 40 % en poids, plus préférablement de 15 à 37 % en poids de PVC.

9. Membrane synthétique pour couverture de toiture selon l'une quelconque des revendications précédentes, comprenant de 0 à 10% en poids d'un stabilisant à l'état liquide, notamment le stabilisant Ba-Zn, le pourcentage en poids étant défini par rapport au poids total de la composition.

10. Membrane synthétique pour couverture de toit selon l'une quelconque des revendications précédentes, comprenant de 5 à 40% en poids, de préférence de 5 à 30% en poids, plus préférentiellement de 8 à 25% en poids, encore plus préférentiellement de 9 à 20% en poids, avantageusement moins de 20% en poids, d'au moins un copolymère polaire comprenant de l'EVA-CO ou de l'EBA-CO, défini par rapport au poids total de la composition.

11. Membrane synthétique pour couverture de toit selon l'une quelconque des revendications précédentes, dans laquelle le au moins un modificateur d'impact cœur-coquille est présent en une quantité de 2 à 25% en poids, plus préférentiellement de 4 à 20% en poids, encore plus préférentiellement de 5 à 15% en poids, définie par rapport au poids total de la composition.

12. Membrane synthétique pour couverture de toit selon l'une quelconque des revendications précédentes, dans laquelle l'au moins un auxiliaire de traitement polymérique est présent en une quantité de 2 à 25% en poids, plus préférentiellement de 4 à 20% en poids, encore plus préférentiellement de 5 à 15% en poids, définie par rapport au poids total de la composition.

13. Membrane synthétique pour couverture de toit selon l'une quelconque des revendications précédentes comprenant de 0 à 20% en poids d'un plastifiant défini selon le poids total de la composition.

14. Membrane synthétique pour couverture de toit selon l'une quelconque des revendications précédentes comprenant de 0,1-25% en poids d'élastomère thermoplastique comprenant du PVC et des polyacrylates, défini selon le poids total de la composition.
